# EUROPEAN PATENT APPLICATION

(11) **EP 0 762 146 A1**
(43) Date of publication of application: **12.03.1997**
(21) Application number: 95114276.9
(22) Date of filing: 12.09.1995
(51) Int. Cl.: G01V 1/18

(54) **Seismic sensor**

(71) Applicant: PRAKLA-SEISMOS GmbH, 30655 Hannover (DE)
(72) Inventor: Laake, Andreas, D-30167 Hannover (DE)

(57) **Abstract**

In order to improve land seismic survey operations the invention proposes a multi-sensor seismic unit (10) that maybe used for single sensor recording operations also.

A preferred embodiment of the multi-sensor seismic unit (10) according to the invention comprises besides a multi-component geophone (18), and incorporated in one single case (12), i.e. a planting force sensor (26), an anemometer (28), two temperature sensors (30, 46), and a hydrophone (42).

The measurements carried out with these supplemental sensors (26, 28, 30, 42, 46) are related to the physical properties of ground and air around the planted seismic sensor units (10). The knowledge of such physical properties of ground and air is important for the improvement of the signal-to-noise ratio of the output signal of the seismic sensor units (10).

## Description

The present invention is related to the fields of seismic sensors, in particular to those which are used for seismic land exploration.

Such seismic sensors, conventionally called geophones, consist of an electrical velocity meter mounted and secured inside of a case. The geophone cases containing the velocity meter are typically made of cylindrical shape with a small diameter metal spike mounted on the bottom of the case. In order to detect seismic waves caused by a seismic source and propagated through earth formations, such geophone is mechanically coupled to the surface of the earth by driving the spike into the ground. In reality, a certain number of geophones are usually connected together in series via cables to form a group. Further cables connect these groups of geophones electrically to seismic data acquisition devices where the analog output signals of each group of geophones are recorded and further processed in order to determine the subsurface stratigraphy.

Being essential for the quality of seismic signals, a good mechanical coupling of the geophone to the ground is deemed to be achieved when the spike is entirely lowered into the ground until the case sits directly on top of the ground.

The difficulties, however, with achieving satisfactory coupling are apparent:

If the surface of the ground is covered by another media (e.g. leaves, snow etc.) this, if not totally removed, will be trapped between the sensor case and the surface of the ground. This results in a reduced mechanical coupling of the geophone to the ground because of the reduced effective length of the spike in the ground. Additionally, as the center of gravity of such geophones is always above the ground, the less the spike is fixed the more the geophone ends to tip over or tilt because of surface vibrations or wind.

In practice, the output signals of the geophones are not "pure" seismic signal data but are superimposed by noise of non-seismic origin which can be ground borne and/or airborne. The non-seismic noise is not correlated to the seismic signal.

The ground borne noise depends on the rheological properties of the ground. The amount of ground born noise transmitted to seismic sensors depends on mechanical coupling deficiencies caused by misplanting of the geophones in the ground. A particular form of ground born noise is the so-called ground roll noise which is caused by wind interaction on the ground.

The airborne noise depends on the thermodynamical properties of the air. Airborne noise is generated by wind interaction on the cases of the geophones and on interconnecting cables between the geophones and the seismic data acquisition devices. Airborne noise is also related to the thermodynamic properties of the air.

In field seismic operations, a combination is found of all these various noise signals that superimpose on the seismic signal detected by the geophones.

In general, the conventional geophone with its case being always above the surface is thus open to all atmospheric affections, e.g. wind, rain, snow, hail etc. and to any acoustic signals which all will make the case vibrate and result in non-seismic noise superimposed on the sensor output signal.

Today's standard method to reduce non-seismic noise on seismic signal is to deploy groups of multiple analog geophones in a horizontal array on the surface of the earth and to sum up the output signals of the geophones of a group. Considering that a seismic signal arrives almost simultaneously at all geophones and that the non-seismic noise does not, the summation of the signals of geophones improves the signal-to-noise ratio by suppressing at least the statistical events of the non-seismic noise.

In field seismic operation practice, the geophones of a group are located in a predefined distance to each other. Despite the fact that the summed up group signal are helps to purify the output signal from different perturbations of the signal of individual geophones generated by the non-seismic noise, the actually occurring small differences of the arrival time of the seismic waves at the individual geophone of the array, however, result in a smearing of the derived sum signal. Thus, a particular form of a frequency filter, the summation leads to an overall signal with weakened amplitude and phase accuracy. Furthermore the "simple" summation of the geophones' signals provides no correction of the geophones' output signals against insufficient mechanical coupling of a geophones itself to the ground. Any noise that is caused by local and temporal differences of the thermodynamic conditions of ground and air around the individual geophone of the array can not be suppressed.

It is therefore an object of the present invention to overcome the above mentioned deficiencies of known seismic sensors and to provide an improved seismic sensor unit which serves to optimize the signal-to-noise ratio in seismic signals by, amongst other means, improving the mechanical coupling of the seismic sensor unit to the ground.

In order to achieve this objective, the invention proposes a seismic sensor unit comprising a multi-component geophone unit covered by and secured inside a case that can be mechanically coupled to the natural ground, and also comprising at least one electrical cable for connecting the seismic sensor unit to data recording and/or processing devices. The case is of an essentially conical shape with the multi-component geophone unit placed near the center of gravity of the case. The case is also provided with a handling device opposite to the tip of the cone.

One advantage of the inventive seismic sensor unit lays in the conical shape of its case and the multi-component geophone unit positioned near the center of gravity of the case. Contrary to conventional geophone cases having the sensor inside which sit on top of the surface, the seismic sensor unit according to the invention enables the user to push the seismic sensor unit easily and deeply into the ground by manipulating on the handling device. The mechanical coupling of the entire cone of the inventive seismic sensor unit to the ground is optimized because it renders the interior multi-component geophone unit fully sensitive to the seismic signals and in general for all pressure (P-) and shear (S-) waves propagated through the earth. The case can not be affected by atmospheric events which may cause unwanted non-seismic noise. The conical case of the seismic sensor unit with its center of gravity below the surface remains fixed in the ground and can not be tilted or tipped over by gusty winds or ground vibrations.

As mentioned above, the conventional technique of suppressing non-seismic noise by summing up the signals of, and based on the grouping of geophones is not satisfactory. Further increase of the number of geophones for each group does not automatically lead to an entire suppression of noise but to an enormous unproportional increase of cost. In contrary, the interest of the geophysical service as well as of the oil industry is to minimize the total number of geophones that are used for a geophysical survey and to optimize the read out from the output signal of each individual seismic sensor.

Despite the above mentioned drawbacks of non-seismic noise perturbations on the output signal of a conventional geophone, experiments have been carried out with single analog geophones. The experiences have shown that the obtained signal output of such individual geophones suffers from a low signal-to-noise ratio if compared to geophone group signals. Signal degradation is due to electromagnetic interference during the transmission of individual analog signals to the recording system.

Purifying analog seismic sensor output signals from non-seismic noise is important, even for summed-up signals of a group of geophones. And it is apparent that the more the number of geophones in a group is reduced, the weaker the group's signal-to-noise ratio and the more important becomes such suppression of noise. So if only an individual analog seismic sensor is used a significant knowledge of the thermodynamic conditions of ground and air at the place where it is planted is needed for correcting the individual output signal against noise by means of related correlation curves. Conventionally only static measurements of the ground and earth conditions were provided, e.g. before or after termination of the seismic survey operation. The thermodynamic conditions of ground and air may vary from one planted seismic sensor to the other or from one moment to the other and the static measurements may only approach the real situation but are not representative for the duration of the seismic data acquisition. None of the already known geophones which have been employed for single seismic sensor data acquisition is sufficiently capable to detect significantly local and temporal differences of the thermodynamic conditions of ground and air at the place where it is planted.

A further and preferred embodiment of the seismic sensor unit according to the invention is provided with supplemental sensors which serve to determine different thermodynamic conditions of the ground and air at the place where the seismic sensor unit is planted. The data collected by these supplemental sensors are then used for correcting the geophone output signal against non-seismic noise.

Without limiting the invention the more sophisticated modes of realization of the inventive seismic sensor unit according to the invention do not necessarily call for using the all different sensors as are introduced later in the text and claims. The seismic sensor unit may be equipped with any desirable combination of such supplemental sensors to make it more specifically applied to particular physical conditions in the seismic prospecting area.

The seismic sensor unit according to the invention may be used for either conventional geophone group arrays or in "single sensor" seismic exploration as stand-alone sensor unit. In either case it will improve seismic data output in general.

For better understanding of the present invention and as to how the same may be carried into effect, reference will be made, by way of example but not limited thereto, to the accompanying drawings of which:
Figure 1 is a schematic illustration of a complex embodiment of the seismic sensor unit according to the invention fixed in the ground;
Figure 2 is a particular schematic sectional view of the collar of the seismic sensor unit according to Figure 1;
Figure 3 is a schematic sectional view, with enlarged scale, of a particular cross-section with a hydrophone embedded in the case of the seismic sensor unit according to Figure 1;
Figure 4a shows, with slightly reduced scale in a top plan view of the seismic sensor unit according to Figure 1, a first mode of realization of a hot film anemometer according to the invention;
Figure 4b shows, with slightly reduced scale in a top plan view of the seismic sensor unit according to Figure 1, a second mode of realization of a hot film anemometer according to the invention; and
Figure 5 is a schematic illustration of several seismic sensor units according to Figure 1 arranged for a field measurement.

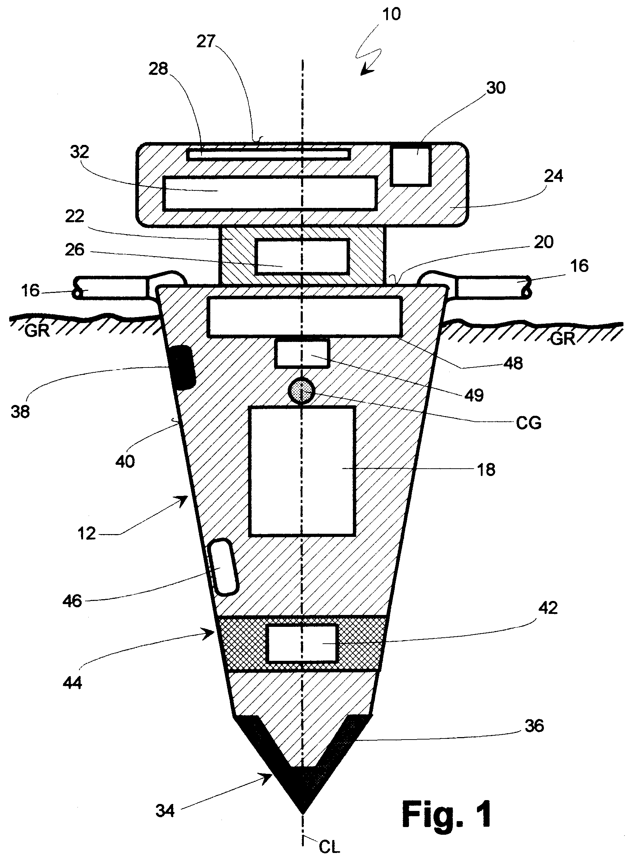

Figure 1 shows a seismic sensor unit 10 according to the present invention with a case 12 of essentially conical shape 14, and preferably manufactured of an electrically non conductive material, e.g. a moldable but robust plastic material. The center line of the case 12 is referred to by CL.

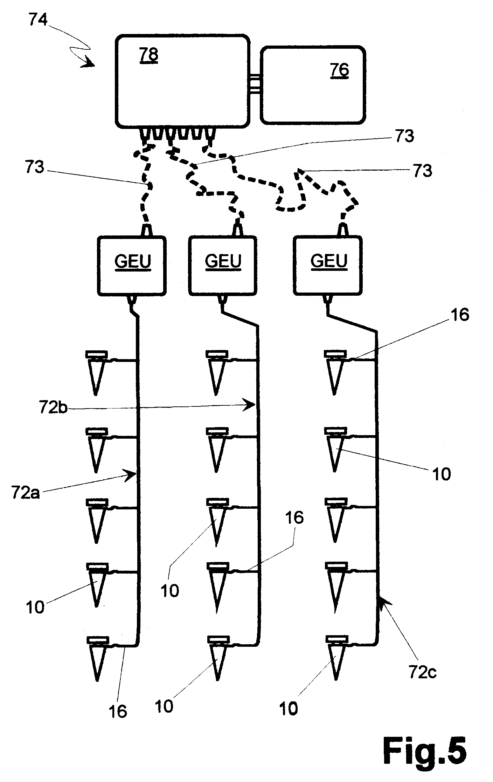

This conical shape enables the seismic sensor unit 10 to be pushed easily into, and as shown in Figure 1, to remain fixed in a ground GR at the desired place for seismic measurement. An electrical cable 16 mounted at the upper part of the case 12 is used to connect the seismic sensor unit 10 to a seismic data acquisition system 74 ( see Figure 5 and the related description text below) which will record and process the signals transmitted from the seismic sensor unit 10. The cable 16 is also useful for providing electric energy to the seismic sensor unit 10 and for any type of bi-directional communication between the seismic data acquisition system 74 and/or other seismic sensor units 10 according to the invention.

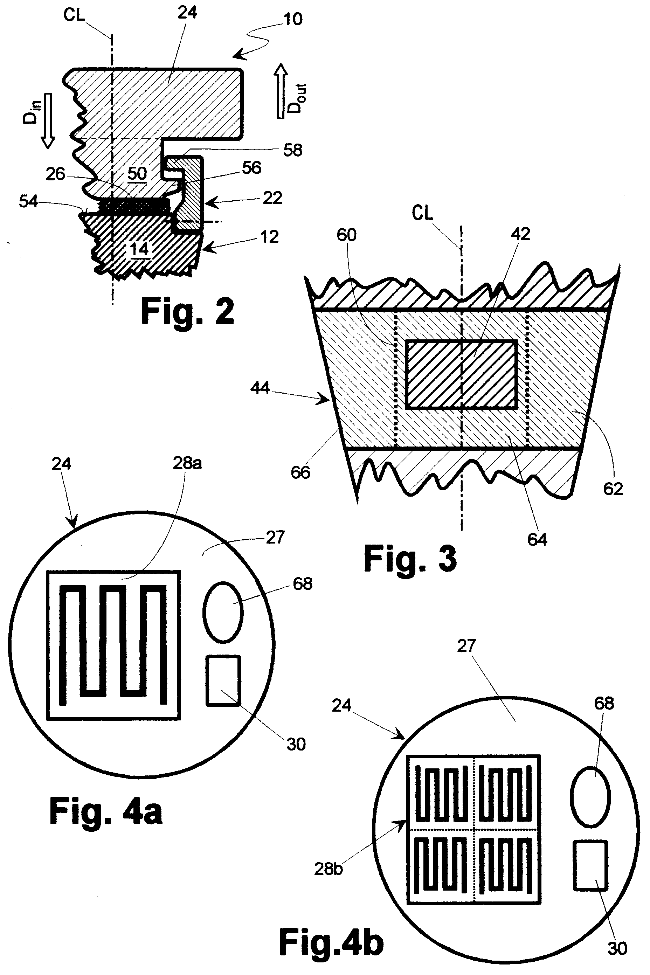

Close to the center of gravity CG of its cone 14 the case 12 contains a geophone unit 18, preferably a multi-component geophone unit of a type well known to those skilled in the art, e.g. a 3-component geophone sensor unit. A collar 22 is mounted on the upper surface 20 of the case 12 which serves to connect a handling device 24 to the case 12. The handling device 24 is used to plant the seismic sensor unit 10 into the ground and to remove it from there. A planting force sensor 26 is located between the handling device 24 and the cone 14, and is encased by the collar 22. During the planting operation the planting force sensor 26 determines the force that is needed to drive the seismic sensor unit 10 into the ground GR. Further details of the planting force sensor 26 will be discussed later in the description text related to the Figure 2.

In the particularly preferred embodiment of the present invention shown in Figure 1, the handling device 24, on its top face 27, is provided with an anemometer 28, an air thermometer 30 and a geographic position detector 32 in its interior. More details of the anemometer 28 are described in the text related to the Figures 4 a and 4 b. The geographic position detector 32 is a so-called GPS-detector (Global Positioning System) which is well known detector type used to determinate the coordinates of its geographic position by satellite signals. Supplemental to that, an air humidity sensor 66 (see Figures 4a, 4b) is implemented into the top surface 27 of the handling device 24.

A tip 34 of the cone 14 of the case 12 consists of an electrically conductive material, preferably metallic material, and is used as a first ground potential electrode 36 in order measure the electrical ground potential against a reference level. In addition, this metallic electrode 36 renders the tip 34 robust and enabled to easily penetrating the ground GR during the planting of the seismic sensor unit 10. The measurement counterpart, the second ground potential electrode 38, is preferably embedded in the upper part of an external surface 40 of the cone 14. Instead of measuring the ground potential by making use of said first and second ground potential electrodes 36,.38 as shown in Figure 1, it is also apparent to those skilled in the art to alternatively use the first ground potential electrode 36 only and to measure the ground potential against the electrical 'ground level' of the cable 16. For example this may be established by electronic units of the seismic data acquisition system 74 or by ground electronic units GEU (see Figure 5) to which the seismic sensor unit 10 or a group thereof is connected via cable 16. Alternatively, the electrodes 36,.38 may be used to determine the electrical conductivity of the ground GR which will be significant for the humidity of the soil.

Above the tip 34 of the cone 14 an electrical pressure sensor 42, preferably a hydrophone, is placed in a particular cross-section 44 of the cone 14. The hydrophone 42 may be of a standard type well known to those skilled in the art. The cross-section 44 and the hydrophone 42 are described later in the description text that is related to Figure 3.

A ground temperature sensor 46 is fixed in the external surface 40 of the cone 14. This temperature sensor 46 is preferably closely placed above the cross-section 44 where the hydrophone 42 is located. Furthermore the cone 14 houses inside the case 12 a sensor electronics module 48 and below that a tilt sensor 49 to detect whether the seismic sensor unit 10 is planted vertically correct or not. The "individual" tilt sensor 49, as shown in Figure 1, is preferably an accelerometer. The same function may be also provided by the geophone unit 18.

Internally all aforementioned sensors 18, 28, 30, 32, 36, 38, 42, 46, 48, 49 and 68 of the seismic sensor unit 10 are electrically connected to the sensor electronics module 48 for supplying electrical energy to these sensors and for the transmission of signals. For simplicity reasons, the electrical connections, e.g. wires, are not illustrated in Figure 1.

It is also well understood that the electronics module 48 is wired to the cable 16 which therefore constitutes a connection between the sensor electronics module 48 and the seismic data acquisition system 74 (see Figure 5).

Figure 2 shows a more detailed view of how the handling device 24 is attached to the case 12 of the inventive seismic sensor unit 10. A shaft 50 of the handling device 24 is fixed inside the collar 22 that itself is fixed to the case 12, preferably radially by screws, as schematically indicated in Figure 2. When the seismic sensor unit 10 is driven into the ground GR (see Figure 1), following the direction indicated by an arrow Dᵢₙ , the shaft 50 of the handling device 24 is moved downwards and impacts on the planting force sensor 26. This planting force sensor 26 is preferably a known piezo-electric force or - for a well defined impact area of the shaft 50 - pressure sensor and is placed between the shaft 50 of the handling device 24 and a top face 54 of the case 12. Impacted by the shaft 50 during the planting operation of the seismic sensor unit 10 the planting force sensor 26 generates a electric output signal which is proportional to the mechanical resistance of the ground GR against the penetration of the cone 14 of the seismic sensor unit 10 (see Figure 1).

The planting force related signal is characteristic for the physical properties of the soil at the point of planting.

Comparing an actually measured planting force of one individual seismic sensor 10 against already measured data related to the same type of ground or data just measured before at seismic sensors in the direct vicinity may serve to estimate the quality of the mechanical coupling of the seismic sensor unit 10 to the ground GR.

The signals of the planting force sensor 26 help to indirectly estimate other physical properties of ground which determine the propagation of noise waves in the ground surface. In combination with other ground characteristics ground surface noise can be easier identified and minimized.

In addition, signals derived from the planting force sensor 26 are useful for automated planting actions of seismic sensor units. When a machine is used to drive the seismic sensor units 10 into the ground GR the actually measured needed planting force can be cross-checked against already evaluated and stored planting force signals once obtained in the same the type of ground. This helps to improve the automated planting, avoids damages and optimize the mechanical coupling of the planted seismic sensors 10 to the ground GR.

Figure 2 also indicates how after termination of the seismic measurement operation the seismic sensor units 10 involved are picked up and recovered by being removed out of the ground GR. Pulling at the handling device 24 into the direction indicated by an arrow Dₒᵤₜ the shaft 50 liberates from the planting force sensor 26 until a stop flange 56 that is radially extending from the shaft 50 comes in contact with a retainer 58 on the collar 22. This retainer 58 protrudes inwardly into the interior of the collar 22 and restricts its internal diameter so that the upward displacement of the stop flange 56 respectively of the shaft 50 is limited.

It is also apparent from the Figure 2 that both the retainer 58 on the collar 22 as well as the stop flange 56 serve to guide, by form fit, the displacement of the shaft 50 inside the collar 22 in order to not cause any undesired impact of the shaft 50 onto the planting force sensor 26 during the planting operation.

Figure 3 is a detailed illustration of how the hydrophone 42 is mounted inside an essentially hollow cross-section 44 of the cone 14. A hydrophone cage 60 that surrounding the hydrophone 42 is preferably formed by several metal rods which are mounted coaxially to the center line CL, providing some room between each other, and to which the hydrophone 42 is mechanically fixed. The cage 60 is placed in the center of the cross-section 44 where it separates an outer annular space 62 from an inner annular space 64 around the hydrophone 42. Although mounted inside of the case 12 of the seismic sensor unit 10 the hydrophone 42, a pressure sensor, must be sensitive to incoming pressure waves in the ground GR coming from outside of the case 12. Thus, an outer conical wall 66 of the cross-section 44 is made of elastic material that serves to transmit arriving pressure waves to the outer and inner annular space 62, 64 that are filled with a material with a suitable acoustic impedance, preferably polyurethane.

Figures 4a and 4b are top views of the of the seismic sensor unit 10 and more particular of the handling device 24 (see Figure 1). The Figures 4a and 4b give two examples of the multiple types of possible anemometer 28a and 28b that may be implemented in the inventive seismic sensor unit 10. Figure 4a shows a non-directional anemometer 28a, preferably a hot film anemometer. The anemometer illustrated in Figure 4b is directional anemometer, also preferably of the hot film type. Apparent to those skilled in the art, this directional anemometer serves to provide a 2-dimensional determination of the direction of a wind acting on the handling device 24.

In the Figures 4a and 4b, an additional air temperature sensor 30 is schematically shown that is, as is the ground temperature sensor 46 (see Figure 1), preferably a Peltier-element sensor. To complete the drawing, an air humidity sensor 68 is indicated in the Figures 4a and 4b.

The following describes the operation of the seismic sensor unit 10 according to the invention whereby reference is made to Figure 5:

In Figure 5, several seismic sensor units 10 are shown which are arranged, cabled and ready to be planted into the ground in an area where the seismic exploration measurement shall take place. A certain number of the seismic sensor units 10, e.g. five as shown in Figure 5, are connected to each other by cable 16 (see Figure 1) and form sensor lines 70a, 70b or 70c each of these connected to a ground electronics unit GEU. As for example reasons Figure 5 only presents three sensor lines 70a, 70b and 70c although in reality, as known to those skilled in the art, there could be less or more. The whole arrangement shown in Figure 5 is called an array.

The cabled interconnection of each sensor line 70a, 70b or 70c forms and functions like a signal transfer bus that serves to transmit signals to or from each individual seismic sensor unit 10 to the ground electronic units GEU. Each signal transfer bus 72a, 72b and 72c also serve to supply electric energy. Each ground electronic unit GEU is electrically connected to the seismic data acquisition system 74 that comprises e.g. a data recording unit 76 and data processing unit 78.

Before the seismic sensor units 10 are deployed and, at the selected places, driven into the ground GR a general initial test of all particular sensors 18, 26, 28, 30, 32, 36, 38, 42, 46, 49 and 68 (see Figure 1) in each seismic sensor units 10 is initiated by the data acquisition system 74. Such test serves to verify that all electrical connections are desirably established and that all sensors 18, 26, 28, 30, 32, 36, 38, 42, 46, 49 and 68 (see Figure 1) function well.

In case of any technical deficiency the point of failure will be identified and fixed. If the initial test proves that there is no defect in the entire array the seismic sensor units 10 are planted into the ground. The planting force sensor 26 (see Figure 1) of each seismic sensor unit 10 that is intended to be driven into the ground is activated and the detected planting force, measured during the planting, is transmitted to and registered in the seismic data acquisition system 74. The collected and stored planting force data transmitted to the seismic data acquisition system 74 are processed and compared to stored correlation diagrams of the same type of ground. Such correlation curves are derived from former field evaluations or laboratory tests about the behavior of the planting force sensor in the particular ground concerned. If no correlation curves exist each measured planting force signal is compared to the one obtained before and maybe to the average value of all planting force signals. Either method will clearly indicate if and where an unusual variation of a particular signal represents a missing of sufficient mechanical contact of the seismic sensor unit 10 concerned to the ground.

After the seismic sensor units 10 are planted, the seismic data acquisition system 74 consecutively inquires response signals from the tilt sensors 49 of each seismic sensor unit 10 which indicate whether the seismic sensor unit 10 concerned has been planted in an upright or inclined or has fallen into an undesired position.

Next step or parallel action which is carried out under control of the seismic data acquisition system 74 is the evaluation of the ground potential by addressing the ground potential electrodes 36, 38 (see Figure 1) of each planted seismic sensor unit 10. As already described above, the first ground potential electrode 36 is placed at the deepest point of a planted seismic sensor unit 10; the second ground potential electrode 38 of an exactly planted sensor unit 10 lays closely to the surface but still inside the ground. Thus, a ground potential measurement of an incorrectly planted seismic sensor unit 10, where only the first electrode 36 is inside and connected to the ground, does show an open circuit. By successively performing ground potential measurements at each seismic sensor unit 10 a mis-planted sensor unit 10 is also identified. Each misplanted seismic sensor unit 10 is identified and if needed replanted.

Then the geographical position detector 32 of each seismic sensor unit 10 is activated and the actual geographic position of each successively questioned by the seismic data acquisition system 74. The individual position of each seismic sensor unit 10 is checked for whether it is identical to a pre-defined geographical position or lies distant in an acceptable range.

Those skilled in the art know how essential a correct planting of the seismic sensor units is for the following seismic data evaluation. The aforementioned explanations about planting force determination, tilt signals, ground potential measurement, and geographical position verification and about how a mis-planted seismic sensor unit can be remotely identified illustrate the advantages given by the invention in comparison to the conventional seismic exploration technique. Instead of recognizing unexplainable seismic signals caused by a mis-planted conventional seismic sensor or a group thereof at the data processing state, the inventive seismic sensor unit 10 enables the user, in advance, to identify a potential source of inadequate and unwanted data.

After all seismic sensor units 10 are arranged and well planted the temperature of the air and ground is measured by involving the temperature sensors 30 and 46 (see Figure 1). The measuring of the temperatures is periodically repeated during the seismic data evaluation. In particular air temperature is controlled preferably each minute whereas ground temperature is measured in longer terms, e.g. each hour.

The humidity of the air is determined by the air humidity sensor 68 (see Figure 2). This measurement is repeated each hour during the seismic data evaluation operation. In case of rain the air humidity is measured more often and preferably accompanied by a measurement of the ground humidity via the electrodes 36, 38. Variations in ground potential indirectly also help to estimate changes of ground humidity; ground potential is therefore measured if needed. Knowledge of the ground humidity or variations thereof is important for the determination of the elasticity of the ground, and in particular of the 'Hook' law related behavior in view of wave (including noise) propagation in the ground. In case of rain also the temperature measurements are intensified and the periods of control shortened to determine the changes and the grade f change of the ground temperature result to the rain.

Further more, by means of the anemometer 28a or 28b mounted in the handling device 24 (see Figures 1, 4a and 4b), wind speed is determined during seismic data evaluation. The knowledge of the wind speed and its dynamic behavior is very helpful to estimate the wind related vibration of the case 12 and on the cable because this noise due to these vibrations superimpose on the output signal of the seismic sensor unit 10.

Parallel to seismic data acquisition measurements are continuously carried out with the hydrophone 42 in order to determine the horizontal pressure in the ground GR.

After the seismic data survey operation has been completed, the 'raw' data (including the imposed noise signals) which were collected and recorded by the seismic data acquisition system 74 (see Figure 5) are processed. The measured wind speed (and if measured the wind direction) data are analyzed and correlated with ground roll induced by the wind. In combination with the hydrophone output of horizontal pressure data the amount of ground roll noise imposed on the seismic signal can be determined and filtered from the raw seismic data. The wind related data also indicate whether the wind made the case and/or cable of a seismic sensor unit vibrate. A correlation of the wind related data with the stored seismic sensor unit output leads to the elimination of the wind related noise signals.

### List of Reference Numbers:

- 10: seismic sensor unit
- 12: case
- 14: cone
- 16: cable
- 18: multi-component geophone unit
- 20: top face of (12)
- 22: collar
- 24: handling device
- 26: planting force sensor
- 27: top of (24)
- 28: anemometer
- 28a: unidirectional anemometer
- 28b: bi-directional anemometer
- 30: air temperature sensor
- 32: position detector
- 34: tip of (14)
- 36: 1st ground potential electrode
- 38: 2nd ground potential electrode
- 40: external surface of (14)
- 42: hydrophone
- 44: cross-section of (14)
- 46: ground temperature sensor
- 48: sensor electronics module
- 49: tilt sensor
- 50: shaft of (24)
- 54: top face of (12)
- 56: stop flange on (50)
- 58: retainer on (22)
- 60: hydrophone cage inside (44)
- 62: outer annular space in (44)
- 64: inner annular space in (44)
- 66: outer wall of (44)
- 68: air humidity sensor
- 70a,b,c: array
- 72a,b,c: signal transfer bus
- 73: cable
- 74: seismic data acquisition system
- 76: seismic data recording unit
- 78: seismic data processing unit
- CL: center line
- CG: center of gravity
- Dᵢₙ: direction of deployment
- Dₒᵤₜ: direction of picking up
- GEU: ground electronics unit
- GR: ground

## Claims

1. Land Seismic Sensor unit (10) comprising a multi-component geophone unit (18) covered by and secured inside a case (12) which can be mechanically connected to a natural ground (GR), and also comprising at least one electrical cable (16) for connecting the seismic sensor unit (16) to data recording and/or processing devices, characterized in that the case (12) is essentially of a conical shape and the multi-component geophone unit (18) is placed near the center of gravity (CG) of the case (12), and in that the case (12) is provided with a handling device (24) at its end face (20) opposite to a tip (34) of the cone (14).

2. Seismic Sensor unit (10) according to claim 1 characterized in that the handling device (24) is connected to the conical part (14) of the case (12) by means of a collar (22) inside of which a planting force sensor (26) is located.

3. Seismic Sensor unit (10) according to claim 2 characterized in that the planting force sensor (26) is either a pressure, force or torsion detecting sensor.

4. Seismic Sensor unit (10) according to one of claims 2 or 3 characterized in that the case (12) furthermore houses a hydrophone (42).

5. Seismic Sensor unit (10) according to one of the claims 2 through 4 characterized in that a tilt sensor (49) is implemented in the case (12).

6. Seismic Sensor unit (10) according to one of the claims 2 through 5 characterized in that an electrical anemometer (28) is imbedded in a top face (27) of the handling device (24).

7. Seismic Sensor unit (10) according to claim 6 characterized in that the anemometer (28) is a hot film anemometer.

8. Seismic Sensor unit (10) according to anyone of the preceding claims characterized in that it is provided with at least one electrical temperature sensor (30 or 46).

9. Seismic Sensor unit (10) according to one of the claims 2 through 8 characterized in that it is provided with at least a sensor (36) for detection of electrical ground potential.

10. Seismic Sensor unit (10) according to claim 9 characterized in that it is equipped with a case (12) of an essentially non-conductive material and a first electrode (36) mounted in the tip (34) and a second electrode (38) mounted close to the top face (20) of said case (12).

11. Seismic Sensor unit (10) according to one of the preceding claims 2 through 10 characterized in that either an upper part of the case (12) or of the handling device (24) bears an electronic geographic position detector (32).
